# EUROPEAN PATENT SPECIFICATION

(11) **EP 1 685 890 B1**
(45) Date of publication and mention of the grant of the patent: **30.06.2010**
(21) Application number: 05104513.6
(22) Date of filing: 26.05.2005
(51) Int. Cl.: B01D 53/28, B01D 53/26, B01D 53/34

(54) **Method and device for heat recovery from moisture-laden gas by a hygroscopic medium**
Verfahren und Vorrichtung zur Wärmerückgewinnung aus einem feuchtigkeitsbeladenen Gas mit einem hygroskopischen Stoff
Procédé et dispositif pour la récupération de chaleur à partir d'un gaz chargé d'humidité avec un agent hygroscopique

(30) Priority: 28.05.2004 SE 0401390
(43) Date of publication of application: 02.08.2006
(73) Proprietor: HyHeat AB, 11431 Stockholm (SE)
(72) Inventor: Westermark, Mats, 183 65 Täby (SE)
(74) Representative: Stenbäck, Maria Elisabeth

(56) References cited:
- EP-A- 0 857 923
- US-A- 3 733 777
- US-A- 3 960 519
- US-A- 4 586 940
- US-A- 4 842 835
- P. BITTRICH, D. HEBECKER: "Integration offener Absorptionskreisprozesse zur kombinierten Wärmenutzung und Entfeuchtung in technologische Systeme" CHEMIE INGENIEUR TECHNIK, [Online] vol. 75, no. 5, 23 April 2003 (2003-04-23), pages 576-580, XP002377651 Weinheim
- BITTRICH, BERGMANN, HEBECKER: "Entwicklung eines Hochtemperatur Brennwertkessels" VDI-BERICHT 1321, March 1997 (1997-03), pages 327-340, XP009065460
- HEBECKER D ET AL: "Energy and materials conversion with the help of regeneration and energy transformation" INTERNATIONAL JOURNAL OF THERMAL SCIENCES, EDITIONS ELSEVIER, PARIS, FR, vol. 40, no. 4, April 2001 (2001-04), pages 316-328, XP004235242 ISSN: 1290-0729

## Description

### Field of the Invention

The present invention relates to a method and a device for heat recovery and heat pumping from moisture-laden gas by a hygroscopic medium.

### Background Art

Owing to increasing energy prices, the economic incentives are great in terms of making energy plants more efficient to achieve a smaller consumption of fuel in production of a given amount of electricity and heat. An important measure is to equip power plants and boilers with devices for rendering the heat recovery more efficient. The exchange of heat for different purposes is increased, such as vapour or hot water for industries, district heat for heating of dwellings and hot tap water. In summer, when the need for district heating is small, heat can instead be used to provide comfort cooling by means of absorption refrigerators.

Examples of power cycles using air as the working fluid are gas turbines, gas engines and diesel engines. In a plant completely without losses, the total efficiency (exchange of electricity + heat) would amount to 100% of the high heating value (HHV) of the fuel, which when using natural gas as fuel corresponds to about 112% of the low heating value (LHV) of the fuel. However, the energy losses amount to about 25-30%, and it is common for a commercial plant to achieve about 80% total efficiency (maximum about 90%) based on the low heating value. A predominant part of the losses depends on the waste heat content of flue gas, which is suitably divided into sensible flue gas losses (the energy content emitted by the flue gas if cooled to the temperature of the ambient air) and latent losses (the energy content emitted by the water vapour of the flue gas if condensed). For natural gas, the latent losses constitute about 12% of the LHV.

The high losses in a conventional gas turbine are due to the fact that a great excess of air is used in the gas turbine. Only a small amount of the air is used as oxygen source, whereas the major part of the air is used as the working fluid for generating work during expansion in the turbine. The discharged flue gas causes heat losses when leaving the plant at a considerably higher temperature than the ambient air. Moreover, with a great excess of air the water vapour from the combustion will be diluted and the condensing heat cannot be recovered for district heating, since it does not have a sufficiently high temperature. A gas turbine exhaust gas has a dew point at about 40-45°C, which is too low for it to be used in a district heating network.

In a gas engine or a diesel engine, the excess of air is normally smaller than in a gas turbine, but on the other hand there will be losses in jacket cooling, lubricant oil cooling and charge air cooling. The combined losses reach the same magnitude as for a gas turbine, which gives a total efficiency of 75-80%. The exhaust gas from a gas engine has a dew point of about 50°C, which makes it difficult to use the latent waste heat for producing district heat. In some cases, a small amount of the water vapour in the flue gas can be condensed, but this implies low temperature requirements from the district heating user.

The optimal conditions for a high total efficiency are found in district heating boilers (steam boilers or hot water boilers) where a small excess of air is used. Especially in the cases where use is made of moisture-laden fuels, such as non-dried biofuel, the dew points will be sufficiently high for the latent waste heat to be partly used for district heating. However, also in this case a considerable part of the latent heat in the flue gas will be lost since the discharged flue gas still contains a considerable amount of water vapour.

In the most advanced plants for flue gas condensing, heat pumps are used. They can condense the water vapour content of the flue gas at a low temperature, for instance 30°C, and upgrade the condensing heat to district heating temperature, for instance 70°C. For the operating expenses to be kept low, absorption heat pumps are used in most cases like in Bittrich and Hebecker, Integration offener Absorptionskreisprozesse zur kombinierten Wärmenutzung und Entfeuchtung in technologische Systeme", Chemic Ingenieur Technik 75 (2003) p. 576-580, which are driven by heat, with the pair of media lithium bromide/water. For instance, in Sweden there are currently only five such plants with absorption heat pumps which upgrade flue gas waste heat. Thus, this technique is not used to a very great extent, which is due to high investment costs (high costs for heat exchangers and jacket for external pressure above atmospheric) and also the limited temperature performance of the lithium bromide.

### Summary of the Invention

The object of the present invention thus is to solve the above-mentioned problems regarding inefficient heat recovery in energy plants.

According to the present invention, this object is achieved by a method for heat recovery and heat pumping from moisture-laden gas by a hygroscopic medium, characterised by the steps of
a) contacting the gas at a temperature above the dew point with a hygroscopic medium in a regenerating step,
b) subsequently cooling the gas in a condensing step below the dew point, and
c) after that contacting the gas in a hygroscopic dehumidifying step with the hygroscopic medium obtained from the first-mentioned regenerating step.

Moreover, according to the present invention, this is achieved by a device for heat recovery and heat pumping from moisture-laden gas by a hygroscopic medium, characterised by a regenerating device for concentration of the hygroscopic medium by the gas at a temperature above the dew point, a condensing device comprising heat exchanging devices for cooling of the gas below the dew point and a hygroscopic dehumidifying device comprising heat exchanging devices with the hygroscopic medium obtained from the first-mentioned regenerating device.

Further features and advantages of the present invention will appear from the following description and the subsequent claims.

### Brief Description of the Drawings

The invention will now be described in more detail with reference to the accompanying schematic drawings, which by way of example illustrate currently preferred embodiments of the invention. However, it should be emphasised that the invention is not limited to the embodiments described.
Fig. 1 illustrates schematically an example of a device according to the invention for district heat production from exhaust gases in a gas engine.
Fig. 2 illustrates schematically an example of a device according to the invention for steam production from pressurised exhaust gases in a gas engine.
Fig. 3 illustrates schematically an example of a device according to the invention for production of hot water and dehumidified hot air from drying gases in a paper-making machine.

### Detailed Description of Preferred Embodiments

The method according to the invention implies that moisture-laden gas is cooled and dehumidified by contact with a hygroscopic medium, preferably hygroscopic liquid. Recovered heat is used and dehumidified gas is discharged to the ambient air or recirculated to the process. The hygroscopic solution is regenerated by hot gas, preferably by direct contact.

The advantages of the method are mainly as follows:
- Low costs for heat exchangers, since heat transfer between gas and hygroscopic medium occurs by direct contact in both the absorption step and the regenerating step. Column packing beds or other contact apparatus are considerably less expensive than metal heat exchangers.
- Low costs for the jacket since pressure below atmospheric is avoided. A compact design and a low weight compared with conventional absorption heat pumps.
- Better performance (greater temperature-increasing effect) than a conventional absorption heat pump, which results in better heat recovery and/or a higher flow temperature. Flexibility in the choice of absorbent results in a lower cost than for lithium bromide.
- Low corrosivity for heat exchanger surfaces since indirect heat exchange only occurs at relatively low temperatures.

In a first step, the hot moisture-laden gas is contacted at a temperature above the dew point with a hygroscopic medium in a regenerating step, the medium being concentrated while at the same time the temperature of the gas decreases and its moisture content increases

In a second step, a condensing step, useful heat is recovered by heat exchange, preferably in counterflow, the temperature of the gas being reduced below the dew point and the vapour content being reduced. The heat exchange can be performed by contacting the gas directly with the heat exchanger surface or by cooling the gas with circulating cooled water in a contact device. The temperature performance of the step is limited by the temperature equilibrium, i.e. the gas will have a slightly higher temperature at the outlet than the inlet temperature of the heat-absorbing medium.

In a third step, additional heat is recovered by contacting the gas with the hygroscopic medium obtained from the first-mentioned regenerating step, the vapour content of the gas being decreased (dehumidification). The contact is preferably performed in counterflow, i.e. the coldest solution is contacted with the most dehumidified gas. The dehumidification performance is limited by the temperature and hygroscopic properties (boiling-point elevation) of the hygroscopic medium. If, for instance, the temperature of the hygroscopic medium is 60°C and the boiling-point elevation is 50°C, it is possible to obtain, in equilibrium, a dew point of 10°C in the discharged gas, which results in excellent recovery of latent heat.

To drive the regeneration, it is necessary for the gas originally to be sufficiently hot, or the gas to be heated, directly or via heat exchangers, by, for instance, combustion in a combustion chamber. In some applications and embodiments, a catalytic combustion chamber is preferred.

The size and cost of a regenerating device and condensing device according to the invention can be reduced by only a partial flow of the gas being treated in these steps.

The gas used in the regenerating step preferably has a pressure close to atmospheric pressure, preferably about 80-120% of atmospheric pressure

In a preferred embodiment of the present invention, the gas used in the regenerating step has a pressure of 3-15 bar, more preferred 4-10 bar.

The gas used in the regenerating step preferably consists of exhaust gases.

For flue gases containing sulphuric acid, a sulphuric acid solution can advantageously be used as the hygroscopic medium. In the passing of the flue gas, sulphuric acid (H₂SO₄) will in fact condense in the regenerating step, which can make the plant independent in terms of acid. For gases without sulphuric acid, it is advantageous to use phosphoric acid (H₃PO₄), which has low volatility and also better corrosion properties. The preferred boiling-point elevations are 30-70°C, which corresponds to the acid contents 40-90%, especially 40-80%. Irrespective of the choice of hygroscopic medium, direct contact with the gas implies that the hygroscopic medium can be contaminated by, for instance, captured dust. To reduce the need for exchange, cleaning or supply of hygroscopic medium, the gas should before the inlet of the heat recovery plant be subjected to cleaning involving dust separation (for instance with a fabric filter, high-temperature filter or electrostatic filter). An important measure is also to provide the hygroscopic steps with effective droplet separators so that the loss of the hygroscopic medium by emission to the ambient air is reduced to a minimum. The addition of a dispersing agent and corrosion inhibitors can facilitate the use of the hygroscopic media.

The choice of materials for the device according to the invention is more critical for the regenerating step, where the temperature is high. For the most exposed parts, various corrosion-resistant materials should be selected, for instance ceramics, acid-proof steels, acid-proof brick-linings or surfaces coated with plastic material (Viton, Teflon etc.).

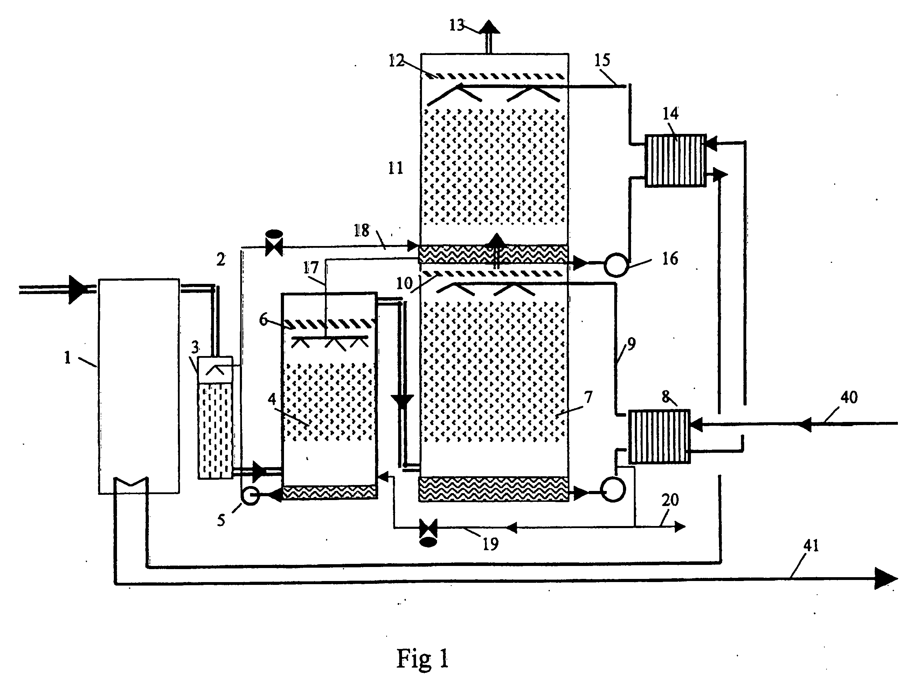

The device according to Fig. 1 can be used for district heat production from exhaust gases in a gas engine, but similar fundamental embodiments can also be used in other applications where the gas contains water vapour, for instance all types of piston engines, gas turbines, steam boilers or district heating boilers. In the device, the gas engine (1) discharges the gas at a relatively high temperature, normally 300-700°C, and the hot gas (2) is supplied to the regenerating step where contact occurs with the hygroscopic medium. In the example, the contact is created by the hygroscopic medium first being injected into the hot gas (2) in the form of droplets in contact equipment (3), after which a further contact is achieved, for instance, in a column packing bed (4). The necessary pumping of the hygroscopic medium is performed by a pump (5). Subsequently the gas passes through a droplet separator (6), where any droplets of the hygroscopic medium are separated and recirculated to the regenerating step. Moreover the gas passes through a condensing step, here exemplified by column packings (7) where heat is supplied to the district heating network via heat exchangers (8) through the circulating water circuit (9). After that, the gas passes through a droplet separator (10), where any water droplets are separated, to be recirculated to the condensing step, and further passed through a hygroscopic condensing step (11), where further dehumidification with subsequent heat recovery can be performed and the heat can be supplied to the district heating network via heat exchangers (14) from the circulation circuit (15) for the hygroscopic medium, which is driven by circulation pumps (16). At the outlet the gas passes through a droplet separator (12) where any droplets of the hygroscopic medium are separated and recirculated to the hygroscopic condensing step. The dehumidified gas is discharged to the ambient air (13). Normal exhaust gas temperatures are in the current district heating case 30-75°C, but their water dew point is only about 0-30°C, when the water vapour content of the gas has been reduced in the hygroscopic condensing step. A partial flow of the hygroscopic medium is discharged to the regenerating step through the discharge pipe (17) and a corresponding amount of concentrated solution is recirculated from the regenerating step through the supply pipe (18). In this manner, a sufficiently high content of the hygroscopic component is maintained in the hygroscopic condenser. Supply of additional water to the regenerating step can occur through a water supply pipe (19) which with its flow-regulating means is used to the same extent as the evaporation of water in the regenerating step exceeds the absorption of water in the hygroscopic condenser. Regulation of the content of the hygroscopic component in the regenerating step and the hygroscopic condenser can occur by flow regulation in the supply pipes 18 and 19, respectively, which are controlled by, for instance, temperature sensors or density sensors. The excess of condensed water is discharged through the discharge pipe (20). The design of the condenser and the hygroscopic condenser is in this case exemplified by column packings of, for instance, glass-fibre reinforced plastic and plate heat exchangers, which are suited for operation under close to atmospheric conditions and temperatures below about 120°C. The recovered waste heat is used in a district heating network where return water (40), which normally has a temperature of 40-60°C, is exchanged in the condenser (8) and the hygroscopic condenser (14) and further in the jacket, intercooler and oil cooler of the engine before being recirculated to the supply pipe (41) at normally 70-90°C.

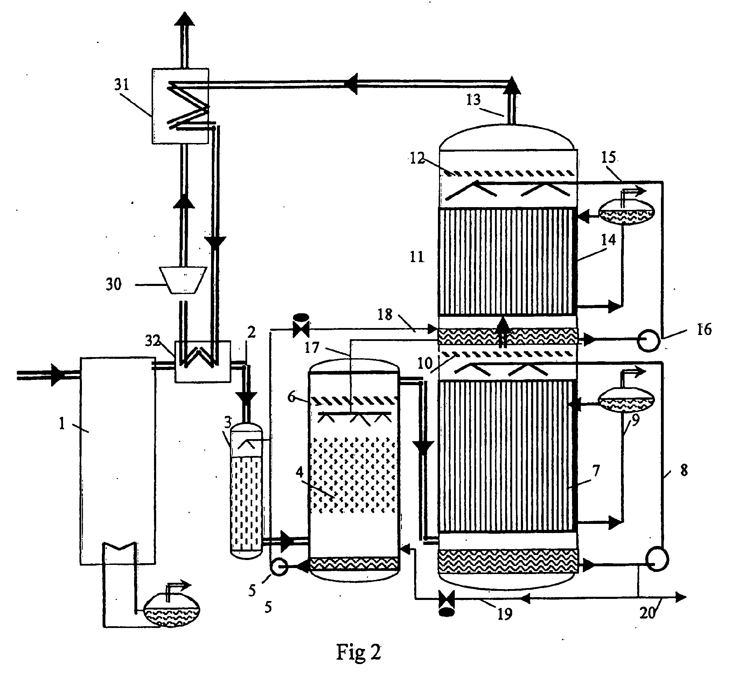

The device in Fig. 2 can be used for steam production from pressurised exhaust gases in a gas engine, but similar fundamental designs can also be used in, for instance, diesel engines or gas turbines. The flue gas in the device according to Fig. 2 is present at excess pressure, since it is discharged before the turbo expander (30). The pressure of the gas is normally 2-5 bar in conventional engines, but can, with relatively simple modifications, be increased to 10-15 bar, which considerably improves the possibility of obtaining process steam for industrial use. An optimal pressure range for steam production is assessed to be 5-15 bar. To make use of the expansion work from the condensed gas, this can be reheated by heat exchange in heat exchangers (31) and (32), respectively, by expander outlets and incoming hot gas. The condenser and the hygroscopic condenser are in this case exemplified with metal heat exchangers, which are suited for operation under pressurised conditions and at high temperatures. In the hygroscopic condenser, the hygroscopic medium is sprinkled on the heat surfaces.

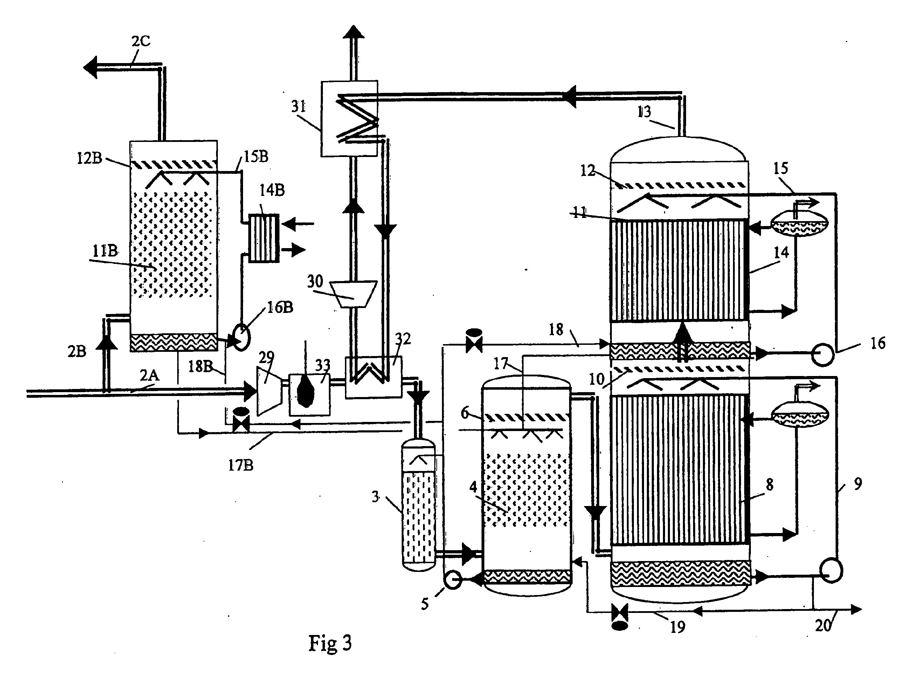

The device according to Fig. 3 is an example of a preferred embodiment when using the invention for production of hot water and dehumidified hot air from drying gases in a paper-making machine. Similar fundamental designs can also be used in processes which produce moisture-laden gas flows, for instance drying plants (fuel driers, wood driers, pulp driers etc). Contrary to the preceding example, the gas is slightly overheated, and the most common temperatures are 40-80°C, but applications with dew points close to 100°C also occur. Applications with pressure above atmospheric and dew points above 100°C occur, for instance, in the drying of fuel. For regeneration, heat must be supplied, which in the examples is provided by a fraction of the gas (2A) being heated, directly or via heat exchangers, by combustion in the combustion chamber (33), and after that being used for regeneration of the absorbent. A considerable part, preferably the major part, of the gas (2B) is dehumidified by passing through the hygroscopic condenser, in which case heat can be recovered and dehumidified gas (2C) be recirculated to the paper-making machine. Advantages in terms of energy and environment are achieved by the possibility of the gas being recirculated in the plant while at the same time heat recovery is obtained, the demand for energy being reduced to approximately half compared with a conventional drying plant or paper-making machine. The size and cost of the regenerating step (3, 4) and the condensing step can in this case be reduced by only a partial flow of the gas being treated in these steps. In certain applications, especially if steam or high heating temperatures are requested, it may be convenient to compress the amount of gas used for regeneration, in which case the regeneration and the subsequent condenser are operated at pressures above atmospheric, resulting in a more compact design and improved temperature performance. As an option, a compressor (29) with compression to 3-15 bar, especially 5-10 bar, a reheater (31), a recuperator (32) and an expander (30) are illustrated in the Figure. However, for many applications, atmospheric operation can provide sufficient temperature performance.

## Claims

1. A method for heat recovery and heat pumping from moisture-laden gas by a hygroscopic medium, comprising the steps of
a) contacting the gas at a temperature above the dew point of the gas by direct contact with a hygroscopic medium in a regenerating step,
b) subsequently cooling the gas in a condensing step below the dew point of the gas such that the vapour content of the as is reduced and heat is recovered by heat exchange, wherein the heat exchange is performed by contacting the gas directly with a heat exchanger surface or by cooling the gas with circulating cooled water in a contact device, and
c) after that, contacting the gas in a hygroscopic dehumidifying step by direct contact with the hygroscopic medium obtained from the first-mentioned regenerating step such that additional heat is recovered from the gas.

2. A method as claimed in claim 1, wherein the gas used in the regenerating step is subjected to heating by direct combustion or heat exchange.

3. A method as claimed in any one of claims 1-2, wherein the gas used in the regenerating step and the condensing step constitutes only a partial flow of the gas.

4. A method as claimed in any one of claims 1-3, wherein the gas used in the regenerating step has a pressure close to atmospheric pressure.

5. A method as claimed in any one of claims 1-3, wherein the gas used in the regenerating step has a pressure of 3-15 bar.

6. A method as claimed in any one of claims 1-5, wherein the gas used in the regenerating step consists of exhaust gases.

7. A method as claimed in claim 6, wherein dust has been separated from the gas used in the regenerating step.

8. A method as claimed in any one of claims 1-7, wherein the hygroscopic medium comprises phosphoric acid.

9. A method as claimed in claim 8, wherein the phosphoric acid content of the hygroscopic medium is 40-90%.

10. A method as claimed in any one of claims 1-7, wherein the hygroscopic medium comprises sulphuric acid.

11. A method as claimed in claim 10, wherein the sulphuric acid content of the hygroscopic medium is 40-90%

12. A device for heat recovery and heat pumping from moisture-laden gas by a hygroscopic medium, comprising
a regenerating device (3, 4) for concentration of the hygroscopic medium by direct contact with the gas (2) at a temperature above the dew point,
a condensing device (7) for cooling of the gas (2) below the dew point, comprising heat exchanging devices (8) for recovering heat, and
a hygroscopic dehumidifying device (11) for dehumidifying the gas with the hygroscopic medium obtained from the first-mentioned regenerating device (3, 4), comprising heat exchanging devices (14) for recovering additional heat.

13. A device as claimed in claim 12, wherein contact devices (3) are arranged between the gas (2) and the hygroscopic medium in the regenerating device (3, 4).

14. A device as claimed in claim 12 or 13, wherein one or more heating devices with direct combustion, catalytic combustion or heat exchange are arranged for the gas (2) used in the regenerating device (3, 4).

15. A device as claimed in any one of claims 12-14, wherein a discharge device is arranged for the gas (2) used in the regenerating device (3, 4) and the condensing device (7) so that only a partial flow of the gas (2) is used for said regenerating (3, 4) and condensing (7) devices.

16. A device as claimed in any one of claims 12-15, wherein a device for dust separation is arranged before the inlet of the regenerating device.

## Patentansprüche

1. Verfahren zur Wärmerückgewinnung und zum Wärmepumpen aus einem feuchtigkeitsbeladenen Gas durch ein hygroskopisches Medium, das die Schritte aufweist:
a) Kontaktaufnehmen mit dem Gas bei einer Temperatur über dem Taupunkt des Gases durch direkten Kontakt mit einem hygroskopischen Medium in einen Regenerationsschritt,
b) anschließendes Kühlen des Gases in einem Kondensationsschritt unter dem Taupunkt des Gases, so daß der Wasserdampfgehalt des Gases reduziert wird und Wärme durch Wärmeaustausch zurückgewonnen wird, wobei der Wärmeaustausch durch direktes Kontaktaufnehmen mit dem Gas mit einer Wärmetauscherfläche oder durch Kühlen des Gases mit umlaufendem Kühlwasser in einer Kontaktvorrichtung durchgeführt wird, und
c) danach Kontaktaufnehmen mit dem Gas in einem hygroskopischen Entfeuchtungsschritt durch direkten Kontakt mit dem hygroskopischen Medium, das aus dem zuerst erwähnten Regenerationsschritt erhalten wird, so daß aus dem Gas zusätzliche Wärme zurückgewonnen wird.

2. Verfahren nach Anspruch 1, wobei das im Regenerationsschritt verwendete Gas durch direkte Verbrennung oder Wärmeaustausch einer Erwärmung unterzogen wird.

3. Verfahren nach einem der Ansprüche 1-2, wobei das im Regenerationsschritt und im Kondensationsschritt verwendete Gas nur einen Teilstrom des Gases bildet.

4. Verfahren nach einem der Ansprüche 1-3, wobei das im Regenerationsschritt verwendete Gas einen Druck nahe des atmosphärischen Drucks aufweist.

5. Verfahren nach einem der Ansprüche 1-3, wobei das im Regenerationsschritt verwendete Gas einen Druck von 3-15 bar aufweist.

6. Verfahren nach einem der Ansprüche 1-5, wobei das im Regenerationsschritt verwendete Gas aus Abgasen besteht.

7. Verfahren nach Anspruch 6, wobei Staub von dem im Regenerationsschritt verwendeten Gas getrennt worden ist.

8. Verfahren nach einem der Ansprüche 1-7, wobei das hygroskopische Medium Phosphorsäure aufweist.

9. Verfahren nach Anspruch 8, wobei der Phosphorsäuregehalt des hygroskopischen Mediums 40-90% beträgt.

10. Verfahren nach einem der Ansprüche 1-7, wobei das hygroskopische Medium Schwefelsäure aufweist.

11. Verfahren nach Anspruch 10, wobei der Schwefelsäuregehalt des hygroskopischen Mediums 40-90% beträgt.

12. Vorrichtung zur Wärmerückgewinnung und zum Wärmepumpen aus einem feuchtigkeitsbeladenen Gas durch ein hygroskopisches Medium, die aufweist
eine Regenerationsvorrichtung (3, 4) zur Konzentration des hygroskopischen Mediums durch direkten Kontakt mit dem Gas (2) bei einer Temperatur über dem Taupunkt,
eine Kondensationsvorrichtung (7) zum Kühlen des Gases (2) unter dem Taupunkt, die Wärmeaustauschvorrichtungen (8) zur Rückgewinnung von Wärme aufweist, und
eine hygroskopisches Entfeuchtungsvorrichtung (11) zur Entfeuchtung des Gases mit dem hygroskopischen Medium, das aus der zuerst erwähnten Regenerationsvorrichtung (3, 4) erhalten wird, die Wärmetauschvorrichtungen (14) zur Rückgewinnung zusätzlicher Wärme aufweist.

13. Vorrichtung nach Anspruch 12, wobei Kontaktvorrichtungen (3) zwischen dem Gas (2) und dem hygroskopischen Medium in der Regenerationsvorrichtung (3, 4) angeordnet sind.

14. Vorrichtung nach Anspruch 12 oder 13, wobei eine oder mehrere Erwärmungsvorrichtungen mit direkter Verbrennung, katalytischer Verbrennung oder Wärmetausch für das in der Regenerationsvorrichtung (3, 4) verwendete Gas (2) angeordnet sind.

15. Vorrichtung nach einem der Ansprüche 12 - 14, wobei eine Ablaßvorrichtung für das in der Regenerationsvorrichtung (3, 4) und der Kondensationsvorrichtung (7) verwendete Gas (2) angeordnet ist, so daß nur ein Teilstrom des Gases (2) für die Regenerationsvorrichtung (3, 4) und die Kondensationsvorrichtung (7) verwendet wird.

16. Vorrichtung nach einem der Ansprüche 12 - 15, wobei eine Vorrichtung zur Staubabtrennung vor dem Einlaß der Regenerationsvorrichtung angeordnet ist.

## Revendications

1. Procédé pour la récupération de chaleur et le pompage de chaleur à partir de gaz chargé d'humidité avec un milieu hygroscopique, comprenant les étapes consistant à
a) mettre en contact le gaz à une température au-dessus du point de rosée du gaz par contact direct avec un milieu hygroscopique dans une étape de régénération,
b) refroidir ensuite le gaz dans une étape de condensation en dessous du point de rosée du gaz de telle sorte que la teneur en vapeur du gaz soit réduite et que la chaleur soit récupérée grâce à l'échange thermique, l'échange thermique étant réalisé en mettant en contact le gaz directement avec une surface de l'échangeur de chaleur ou en refroidissant le gaz avec l'eau refroidie en circulation dans un dispositif de contact, et
c) après cela, mettre en contact le gaz dans une étape de déshumification hygroscopique par contact direct avec le milieu hygroscopique obtenu à partir de l'étape de régénération mentionnée en premier de telle sorte qu'une chaleur supplémentaire soit récupérée à partir du gaz.

2. Procédé selon la revendication 1, dans lequel le gaz utilisé dans l'étape de régénération est soumis à un chauffage par combustion directe ou échange thermique.

3. Procédé selon l'une quelconque des revendications 1 et 2, dans lequel le gaz utilisé dans l'étape de régénération et l'étape de condensation ne constitue qu'un écoulement partiel du gaz.

4. Procédé selon l'une quelconque des revendications 1 à 3, dans lequel le gaz utilisé dans l'étape de régénération a une pression proche de la pression atmosphérique.

5. Procédé selon l'une quelconque des revendications 1 à 3, dans lequel le gaz utilisé dans l'étape de régénération a une pression de 3 à 15 bars.

6. Procédé selon l'une quelconque des revendications 1 à 5, dans lequel le gaz utilisé dans l'étape de régénération est constitué de gaz d'échappement.

7. Procédé selon la revendication 6, dans lequel la poussière a été séparée du gaz utilisé dans l'étape de régénération.

8. Procédé selon l'une quelconque des revendications 1 à 7, dans lequel le milieu hygroscopique comprend de l'acide phosphorique.

9. Procédé selon la revendication 8, dans lequel la teneur en acide phosphorique du milieu hygroscopique est de 40 à 90 %.

10. Procédé selon l'une quelconque des revendications 1 à 7, dans lequel le milieu hygroscopique comprend de l'acide sulfurique.

11. Procédé selon la revendication 10, dans lequel la teneur en acide sulfurique du milieu hygroscopique est de 40 à 90 %.

12. Dispositif pour la récupération de chaleur et le pompage de chaleur à partir de gaz chargé d'humidité grâce à un milieu hygroscopique possédant
un dispositif de régénération (3, 4) pour concentration du milieu hygroscopique par contact direct avec le gaz (2) à une température au-dessus du point de rosée,
un dispositif de condensation (7) pour refroidissement du gaz (2) en dessous du point de rosée, comprenant des dispositifs d'échange thermique (8) pour récupérer de la chaleur, et
un dispositif de déshumidification hygroscopique (11) pour déshumidifier le gaz avec le milieu hygroscopique obtenu à partir du dispositif de régénération mentionné en premier lieu (3, 4), comprenant des dispositifs d'échange de chaleur (14) pour récupérer une chaleur supplémentaire.

13. Dispositif selon la revendication 12, dans lequel les dispositifs de contact (3) sont disposés entre le gaz (2) et le milieu hygroscopique dans le dispositif de régénération (3, 4).

14. Dispositif selon la revendication 12 ou 13, dans lequel un ou plusieurs dispositifs de chauffage avec combustion directe, combustion catalytique ou échange thermique sont disposés pour le gaz (2) utilisé dans le dispositif de régénération (3, 4).

15. Dispositif selon l'une quelconque des revendications 12 et 14, dans lequel un dispositif d'évacuation est disposé pour le gaz (2) utilisé dans le dispositif de régénération (3, 4) et le dispositif de condensation (7) de telle sorte que seul un écoulement partiel du gaz (2) soit utilisé pour lesdits dispositifs de régénération (3, 4) et de condensation (7).

16. Dispositif selon l'une quelconque des revendications 12 et 15, dans lequel un dispositif pour la séparation de poussière est disposé avant l'entrée du dispositif de régénération.
